# EUROPEAN PATENT SPECIFICATION

(11) **EP 4 419 580 B1**
(45) Date of publication and mention of the grant of the patent: **27.08.2025**
(21) Application number: 22800971.8
(22) Date of filing: 10.10.2022
(51) Int. Cl.: C08G 77/14

(54) **METHOD FOR PROMOTING HYDROSILYLATION REACTION TO PREPARE ESTER-FUNCTIONAL SILOXANE OLIGOMERS**
VERFAHREN ZUR FÖRDERUNG DER HYDROSILYLIERUNGSREAKTION ZUR HERSTELLUNG ESTERFUNKTIONELLER SILOXANOLIGOMERE
PROCÉDÉ POUR FAVORISER UNE RÉACTION D'HYDROSILYLATION AFIN DE PRÉPARER DES OLIGOMÈRES DE SILOXANE À FONCTION ESTER

(30) Priority: 21.10.2021 US 202163270075 P
(43) Date of publication of application: 28.08.2024
(73) Proprietor: Dow Global Technologies LLC, Midland, Michigan 48674 (US)
(72) Inventor: BISWAS, Souvagya, Midland, Michigan 48640 (US); FISK, Jason, Midland, Michigan 48640 (US); MUKHOPADHYAY, Sukrit, Midland, Michigan 48640 (US)
(74) Representative: Murgitroyd & Company
(86) International application number: PCT/US2022/077831
(87) International publication number: WO 2023/069844

(56) References cited:
- US-A1- 2009 298 980
- US-A1- 2016 032 060

## Description

### FIELD

A method for preparing an ester - functional siloxane oligomer is disclosed. More particularly, the method employs a promoter to improve yield and selectivity of hydrosilylation of an allyl ether with an organohydrogensiloxane oligomer.

### INTRODUCTION

Currently, siloxane - (meth)acrylate compounds can be synthesized via a direct platinum catalyzed hydrosilylation reaction of a (meth)acryloxy-functional alkenyl compound and an organohydrogensiloxane oligomer, as exemplified below in Equation 1 by the reaction of allyl methacrylate 1 with 1,1,1,3,5,5,5-heptamethyltrisiloxane 2. This reaction is for example disclosed in document US 2016/032060 A1. However, this direct reaction suffers from the drawbacks of poor yield, on the order of 45% to 55% of the desired product (exemplified by MD'M-ALMA 3 in Equation 1) with significant amounts of side products, including an oxy-silylester and an alkylene hydrosilylated product (exemplified in Equation 1 by oxy-silyl ester 4 and propylene hydrosilylated adduct 5, respectively). The oxy-silylester byproduct has a similar boiling point to the MD'M-ALMA, making distillation difficult, time consuming, and expensive.

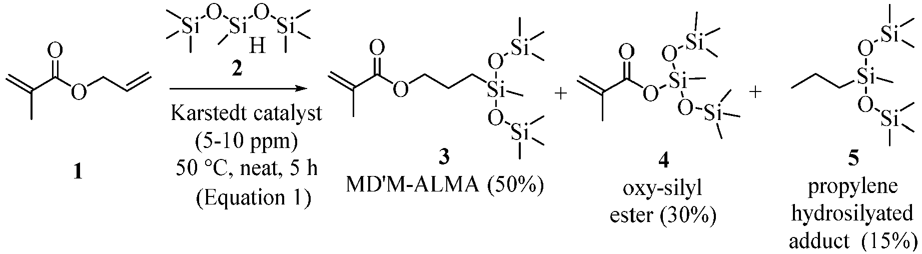

### SUMMARY

A method for preparing an ester - functional siloxane comprises combining starting materials comprising (A) an alkenyl ether and (B) an organohydrogensiloxane oligomer in the presence of (C) a hydrosilylation reaction catalyst and (D) a promoter.

### DETAILED DESCRIPTION

More specifically, the method for preparing the ester - functional siloxane comprises:
(1) combining starting materials comprising
   (A) an alkenyl ether of formula (A1): 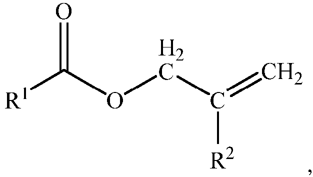 where R¹ is a monovalent hydrocarbon group, and R² is selected from the group consisting of hydrogen and an alkyl group of 1 to 12 carbon atoms;
   (B) an organohydrogensiloxane oligomer of unit formula (B1):
      (R¹₃SiO_{1/2})ₐ(R¹₂HSiO_{1/2})_{b}(HR¹SiO_{2/2})_{c}(R¹₂SiO_{2/2})_{d}, where R¹ is as described above, subscripts a, b, c, and d each represent average numbers of a unit in the unit formula (B1), and subscripts a, b, c, and d have values such that 0 ≤ a ≤ 2; 0 ≤ b ≤ 2; 0 ≤ c ≤ 3, 0 ≤ d ≤ 3, a quantity (a + b) = 2, a quantity (b + c) ≥ 1, and a quantity (a + b + c + d) is 2 to 10;
      where (A) the alkenyl ether and (B) the organohydrogensiloxane oligomer are present in amounts such that a molar ratio of amount of (B) the organohydrogensiloxane oligomer: amount of (A) the alkenyl ether, i.e., (B):(A) ratio, is 1.25:1 to 0.75:1, alternatively 1.0:1 to 1.1:1;
   (C) a platinum hydrosilylation reaction catalyst; and
      an amount sufficient to provide both a yield ratio of the ester - functional siloxane : an oxy -silyl ester side product of ≥ 2.5:1 and a conversion of starting materials (A) and (B) ≥ 50%, of (D) the promoter, where the promoter has formula 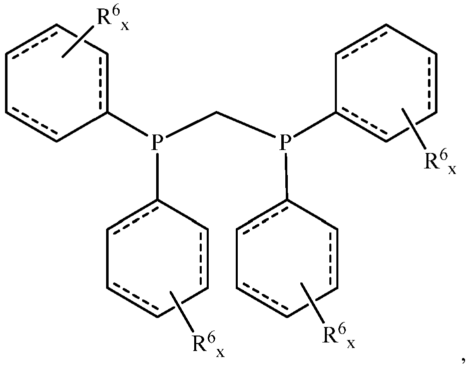 where each group of formula 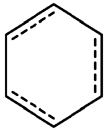 is independently selected from the group consisting of cyclohexyl and phenyl; each R⁶ is an independently selected an alkyl group of 1 to 6 carbon atoms; and each subscript x is independently 0, 1, or 2. Each alkyl group R⁶, when present, is bonded to a carbon atom in a group of formula 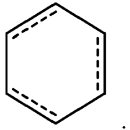 As used herein, "yield ratio" means [(weight/Molecular weight) of the ester - functional siloxane] : [(weight/molecular weight) of the oxy - silyl ester side product].

Step (1) of the method described above may comprise mixing and heating the starting materials. The starting materials may be combined in any order. Alternatively, (C) the platinum hydrosilylation reaction catalyst and (D) the promoter may be combined with one of (A) the alkenyl ether and (B) the organohydrogensiloxane oligomer to form a reaction mixture, and thereafter the other of (A) the alkenyl ether and (B) the organohydrogensiloxane oligomer may be metered into the reaction mixture, either continuously or intermittently. For example, starting materials comprising (A) the alkenyl ether, (C) the platinum hydrosilylation reaction catalyst, and (D) the promoter may be combined to form the reaction mixture, and (B) the organohydrogensiloxane oligomer may be metered into the reaction mixture.

Alternatively, the method may optionally further comprise, before step (1) combining (C) the platinum hydrosilylation reaction catalyst and (D) the promoter before combination with (A) the alkenyl ether and (B) the organohydrogensiloxane oligomer. Starting material (E), a solvent, may be used in step (1), or before step (1), e.g., to facilitate mixing of the starting materials, such as to facilitate mixing of (C) the platinum hydrosilylation reaction catalyst and (D) the promoter. Mixing may be performed at ambient or elevated temperature, e.g., RT to less than boiling point of the solvent selected, such as RT to 50 °C.

Without wishing to be bound by theory, it is thought that combining (C) the platinum hydrosilylation reaction catalyst; and (D) the promoter, optionally in the presence of (E) the solvent, before combination with other starting materials may cause a platinum - ligand complex to form (where the promoter is the ligand), and that this complex may then act as the catalyst in step (1). The starting materials introduced above will now be described in detail, below.

### (A) Alkenyl Ether

Starting material (A) is an alkenyl ether of formula (A1): 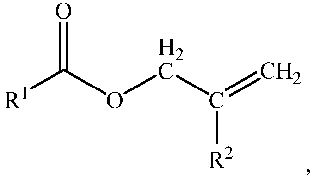 where R¹ is a monovalent hydrocarbon group of 1 to 12 carbon atoms, and R² is selected from the group consisting of hydrogen and an alkyl group of 1 to 12 carbon atoms. Alternatively, each R² may be H.

Alternatively, R¹ may be selected from the group consisting of alkyl groups of 1 to 12 carbon atoms and alkenyl groups of 2 to 12 carbon atoms. The alkyl group for R¹ and/or R² may be methyl, ethyl, propyl (including n-propyl and isopropyl), butyl (including n-butyl, t-butyl, sec-butyl, and isobutyl), pentyl (including n-pentyl, cyclopentyl, and branched isomers with 5 carbon atoms), hexyl (including n-hexyl, cyclohexyl, and branched isomers with 6 carbon atoms). Alternatively, the alkyl group may be methyl or ethyl; alternatively methyl. The alkenyl group for R¹ may be vinyl, allyl, hexenyl, or a branched alkenyl group. For example, the alkenyl group may have formula 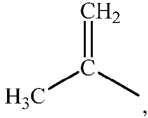 and (A) may be allyl methacrylate, which is commercially available from various sources such as Sigma Aldrich, Inc. of St. Louis, Missouri, USA. Alternatively, the alkenyl group for R¹ may have formula 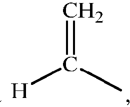 and (A) may be allyl acrylate, which is commercially available from various sources such as Sigma Aldrich, Inc. Alternatively, when R¹ is methyl, (A) may be allyl acetate, which is commercially available from various sources such as Sigma Aldrich, Inc.

Alternatively, starting material (A) may be a (meth)acrylate-functional alkenyl compound of formula (A2): 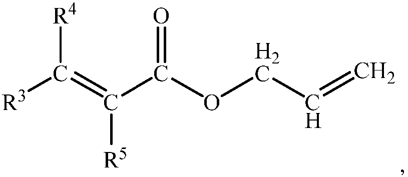 where R⁵ is selected from the group consisting of H, alkyl, and aryl; R³ is selected from the group consisting of H, alkyl, and aryl; and R⁴ is selected from the group consisting of H, alkyl, and aryl. Suitable alkyl groups for R⁵, R³ and R⁴ may have 1 to 12 carbon atoms, alternatively 1 to 6 carbon atoms. The alkyl groups are exemplified by methyl, ethyl, propyl (including n-propyl and/or isopropyl), butyl (including n-butyl, tert-butyl, sec-butyl, and/or isobutyl); pentyl, hexyl, heptyl, octyl, decyl, dodecyl (and branched isomers having 5 to 12 carbon atoms), and the alkyl groups are further exemplified by cycloalkyl groups such as cyclopropyl, cyclobutyl, cyclopentyl, and cyclohexyl. Alternatively, the alkyl group may be selected from the group consisting of methyl, ethyl, propyl and butyl; alternatively methyl, ethyl, and propyl; alternatively methyl and ethyl. Alternatively, the alkyl group may be methyl. Suitable aryl groups may be monocyclic or polycyclic and may have pendant hydrocarbyl groups. For example, the aryl groups include phenyl, tolyl, xylyl, and naphthyl and further include aralkyl groups such as benzyl, 1-phenylethyl and 2-phenylethyl. Alternatively, the aryl group may be monocyclic, such as phenyl, tolyl, or benzyl; alternatively the aryl group may be phenyl. Alternatively, R⁵, R³ and R⁴ may each be selected from the group consisting of H and methyl. Alternatively, R⁵ may be H. Alternatively, R³ may be H. Alternatively, R⁴ may be methyl. Examples of suitable commercially available compounds for starting material (A) include allyl (meth)acrylate. Suitable (meth)acrylate-functional alkenyl compounds are commercially available, e.g., from Sigma Aldrich, Inc. of St. Louis, Missouri, USA.

### (B) Organohydrogensiloxane Oligomer

Starting material (B) used in step (1) of the method described herein is an organohydrogensiloxane oligomer. The organohydrogensiloxane oligomer has at least one silicon bonded hydrogen atom per molecule, alternatively exactly one silicon bonded hydrogen atom per molecule. The organohydrogensiloxane oligomer may have unit formula (B1): (R¹₃SiO_{1/2})ₐ(R¹₂HSiO_{1/2})_{b}(HR¹SiO_{2/2})_{c}(R¹₂SiO_{2/2})_{d}, where each R¹ is as described above, subscripts a, b, c, and d each represent average numbers of a unit in the unit formula and have values such that 0 ≤ a ≤ 2; 0 ≤ b ≤ 2; 0 ≤ c ≤ 3, 0 ≤ d ≤ 3, a quantity (a + b) = 2, a quantity (b + c) ≥ 1, and a quantity (a + b + c + d) is 2 to 10. Alternatively, 8 ≥ (a + b + c + d) ≥ 2, alternatively 6 ≥ (a + b + c + d) ≥ 2, alternatively 3 ≥ (a + b + c + d) ≥ 2, and alternatively (a + b + c + d) = 3.

Alternatively, starting material (B) may be have formula 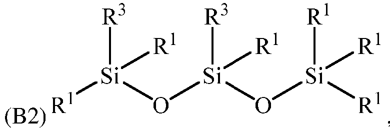 , or 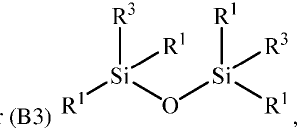 where R¹ is as described above, and R³ is selected from the group consisting of H and R¹, with the proviso that at least one R³ per molecule is H. Alternatively, one R³ per molecule is H and one R³ per molecule is R¹.

Alternatively, starting material (B) may be an organohydrogensiloxane oligomer of 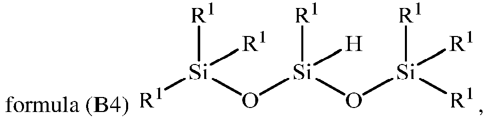 or 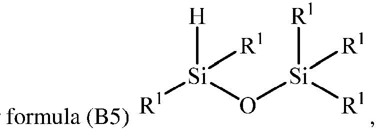 where R¹ is as described above.

Suitable organohydrogensiloxane oligomers for starting material (B) are known in the art and are commercially available. For example, suitable organohydrogensiloxane oligomers for starting material (B) may be 1,1,1,3,5,5,5-heptamethyltrisiloxane, or 1,1,3,3-tetramethyldisiloxane, which are available from, *e.g.*, Sigma-Aldrich, Inc. of St. Louis, Missouri, USA. Alternatively, starting material (B) may be 1,1,1,3,5,5,5-heptamethyltrisiloxane.

Starting material (B) may be one organohydrogensiloxane oligomer, or a combination of two or more oligomers that differ from one another in at least one respect, e.g., selection of R¹, position of the silicon bonded hydrogen, and/or DP. However, (A) the alkenyl ether and (B) the organohydrogensiloxane oligomer are in amounts such that a molar ratio of the amount of (B) the organohydrogensiloxane oligomer: (A) the alkenyl ether (B):(A) is 1.25:1 to 0.75: 1, alternatively 1.0:1 to 1.1:1, used in step (1).

### (C) Platinum Hydrosilylation Reaction Catalyst

Starting material (C) is a hydrosilylation reaction catalyst. The hydrosilylation reaction catalyst will promote a reaction between the alkenyl groups in starting material (A) the alkenyl ether and the silicon bonded hydrogen atoms in starting material (B) the organohydrogensiloxane. Said catalyst comprises platinum. The hydrosilylation reaction catalyst may be (C1) platinum metal, described above; (C2) a compound of platinum metal, for example, chloroplatinic acid (Speier's Catalyst), chloroplatinic acid hexahydrate, platinum dichloride, (C3) a complex of the compound with an alkenyl functional organopolysiloxane, or (C4) a platinum compound microencapsulated in a matrix or coreshell type structure. Complexes of platinum with low molecular weight organopolysiloxanes include a vinyldimethylsiloxane complex with platinum, such as 1,3-diethenyl-1,1,3,3-tetramethyldisiloxane complexes with platinum (Karstedt's Catalyst) and Pt(0) complex in tetramethyltetravinylcyclotetrasiloxane (Ashby's Catalyst). Alternatively, the hydrosilylation reaction catalyst may be (C5) a compound or complex, as described above, microencapsulated in a resin matrix. Specific examples of suitable platinum-containing catalysts for use herein include chloroplatinic acid, either in hexahydrate form or anhydrous form, or a platinum-containing catalyst which is obtained by a method comprising reacting chloroplatinic acid with an aliphatically unsaturated organosilicon compound such as divinyltetramethyldisiloxane, or alkene-platinum-silyl complexes as described in U.S. Patent 6,605,734 to Roy. These alkene-platinum-silyl complexes may be prepared, for example by mixing 0.015 mole (COD)PtCl₂ with 0.045 mole COD and 0.0612 moles HMeSiCl₂, where COD represents cyclooctadienyl. Other exemplary hydrosilylation reaction catalysts are described in U.S. Patents 2,823,218 to Speier; 3,159,601 to Ashby; 3,220,972 to Lamoreaux; 3,296,291 to Chalk, et al.; 3,419,593 to Willing; 3,516,946 to Modic; 3,814,730 to Karstedt; 3,928,629 to Chandra; 3,989,668 to Lee, et al.; 4,766,176 to Lee, et al.; 4,784,879 to Lee, et al.; 5,017,654 to Togashi; 5,036,117 to Chung, et al.; and 5,175,325 to Brown; and EP 0 347 895 A to Togashi, et al. Suitable hydrosilylation reaction catalysts for starting material (C) are commercially available, for example, SYL-OFF^{™} 4000 Catalyst and SYL-OFF^{™} 2700 are available from DSC.

Starting material (C) may be one platinum hydrosilylation reaction catalyst or a combination of two or more of the platinum hydrosilylation reaction catalysts described above. The amount of (C) the platinum hydrosilylation reaction catalyst used in the method will depend on various factors including the selection of starting materials (A), (B), and (D), however, the amount of catalyst is sufficient to catalyze hydrosilylation reaction of SiH and alkenyl groups, alternatively the amount of catalyst is sufficient to provide at least 0.01 ppm, alternatively at least 0.05 ppm, alternatively at least 0.1 ppm, alternatively at least 0.5 ppm, and alternatively at least 1 ppm, by mass of the platinum group metal based on combined amounts of starting materials (A), (B), (C), and (D) used in step (1) of the method described herein. At the same time, the amount of catalyst is sufficient to provide up to 1,000 ppm, alternatively up to 800 ppm, alternatively up to 500 ppm, and alternatively up to 100 ppm by mass of the platinum group metal, on the same basis.

### (D) Promoter

Starting material (D) used in the method described herein is (D) a promoter, which has general formula: 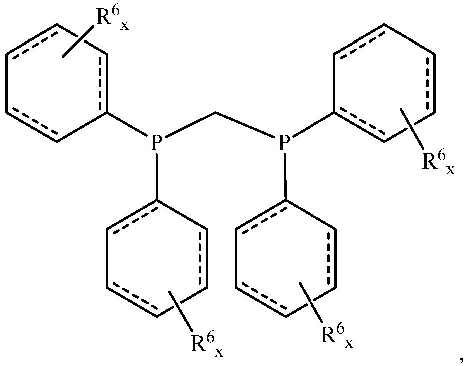 where each group of formula 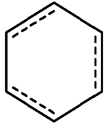 is independently selected from the group consisting of cyclohexyl and phenyl; each R⁶ is an independently selected an alkyl group of 1 to 6 carbon atoms; and each subscript x is independently 0, 1, or 2. Each R⁶, when present, is covalently bonded to a carbon atom in a cyclohexyl or phenyl ring. Suitable alkyl groups for R⁶ include methyl, ethyl, propyl and butyl; alternatively methyl and ethyl; and alternatively methyl. Each subscript x may be 0, 1, or 2; alternatively 0 or 1; and alternatively each x = 0. Each instance of subscript x may be the same or different. Alternatively, (D) the promoter may be selected from the group consisting of: (D1) bis(diphenylphosphino)methane, (D2) bis(dicyclohexylphosphino)methane, and (D3) a combination of both (D1) and (D2). Alternatively, the promoter may be (D1) bis(diphenylphosphino)methane. Alternatively, the promoter may be (D2) bis(dicyclohexylphosphino)methane. Each of these compounds is commercially available from various sources, e.g., from Sigma Aldrich, Inc., TCI America, or Alfa Aesar.

The amount of promoter used in the method is sufficient to provide both a yield ratio of the ester - functional siloxane: the oxy - silyl ester side product of ≥ 2.5:1 and a conversion of starting materials (A) and (B) ≥ 50%. Alternatively, the amount of promoter may be sufficient to provide both a yield ≥ 3:1 and a conversion of starting materials (A) and (B) ≥ 50%. Alternatively, the amount of promoter may be sufficient to provide both a yield ratio ≥ 3.4:1 and a conversion of starting materials (A) and (B) ≥ 50%. Alternatively, the amount of promoter may be > 0.5 mol to < 1.25 mol, per 1 mol of platinum from starting material (C). Alternatively, the amount of promoter may be at least 0.75 mol, alternatively > 0.5 mol, while at the same time the amount of promoter may be up to 1, alternatively < 1.25 mol, per 1 mol of platinum from starting material (C).

### (E) Solvent

Starting material (E) is a solvent, which may be used to facilitate mixing of one or more of the starting materials. For example, (C) the platinum hydrosilylation reaction catalyst may be delivered in a solvent and/or (C) the platinum hydrosilylation reaction catalyst and (D) the promoter may be combined in a solvent before step (1). Suitable solvents include a polydialkylsiloxane, a monohydric alcohol, an aromatic hydrocarbon, an aliphatic hydrocarbons, and a combination of two or more thereof. Polyalkylsiloxanes with suitable vapor pressures may be used as the solvent, and these include hexamethyldisiloxane, octamethyltrisiloxane, hexamethylcyclotrisiloxane and other low molecular weight polyalkylsiloxanes, such as 0.5 to 1.5 cSt DOWSIL^{™} 200 Fluids and DOWSIL^{™} OS FLUIDS, which are commercially available from DSC. The monohydric alcohol may have 1 to 6 carbon atoms, such as methanol, ethanol, isopropanol, n-propanol, n-butanol, t-butanol, isobutanol and/or sec-butanol. The aromatic hydrocarbon may have 6 to 20 carbon atoms, such as benzene, toluene, ethyl benzene, or xylene. The aliphatic hydrocarbon may have 1 to 20 carbon atoms such as heptane, hexane, cyclohexane, or octane. The monohydric alcohols and hydrocarbon solvents are commercially available from various sources, such as Sigma Aldrich, Inc. of St. Louis, Missouri, USA. Starting material (E) may be one solvent or a combination of two or more of the solvents described above.

The amount of solvent will depend on various factors including the type of solvent selected and the amount and type of other starting materials selected for use in the method. However, the amount of solvent may be 0% to 10%, based on combined weights of all starting materials used in step (1).

The method may optionally further comprise adding (F) a (meth)acrylate polymerization inhibitor (inhibitor) before and/or during step (1).

### (F) (Meth)acrylate Polymerization Inhibitor

Starting material (F) is a (meth)acrylate polymerization inhibitor (inhibitor) that may optionally be used in the method. The inhibitor is not limited, and may comprise, alternatively may be, a radical scavenger, an antioxidant, a light stabilizer, a UV-absorber, or a combination thereof. Such inhibitors are known in the art and include a chemical compound or moiety capable of interacting with a free radical to render the free radical inactive, e.g., via elimination the free radical through the formation of a covalent bond therewith. The inhibitor may alternatively be a polymerization retardant, i.e., a compound that reduces the rate of initiation and/or propagation of a radical polymerization. For example, the inhibitor may comprise, alternatively may be, oxygen gas. In general, the inhibitor is utilized to prevent and/or suppress the formation of side products that may be formed via radical polymerization of a moiety on starting material (A).

The inhibitor (F) may comprise a phenolic compound, a quinone or hydroquinone compound, an N-oxyl compound, a phenothiazine compound, a hindered amine compound, or a combination thereof. Examples of phenolic compounds include phenol, alkylphenols, aminophenols (e.g. p-aminophenol), nitrosophenols, and alkoxyphenols. Specific examples of such phenol compounds include o-, m- and p-cresol(methylphenol), 2-tert-butyl-4-methylphenol, 6-tert-butyl-2,4-dimethylphenol, 2,6-di-tert-butyl-4-methylphenol, 2-tert-butylphenol, 4-tert-butylphenol, 2,4-di-tert-butylphenol, 2-methyl-4-tert-butylphenol, 4-tert-butyl-2,6-dimethylphenol or 2,2'-methylenebis(6-tert-butyl-4-methylphenol), 4,4'-oxybiphenyl, 3,4-methylenedioxydiphenol (sesamol), 3,4-dimethylphenol, pyrocatechol (1,2-dihydroxybenzene), 2-(1'-methylcyclohex-1'-yl)-4,6-dimethylphenol, 2- or 4-(1'-phenyleth-1'-yl)phenol, 2-tert-butyl-6-methylphenol, 2,4,6-tris-tert-butylphenol, 2,6-di-tert-butylphenol, nonylphenol, octylphenol, 2,6-dimethylphenol, bisphenol A, bisphenol B, bisphenol C, bisphenol F, bisphenol S, 3,3',5,5'-tetrabromobisphenol A, 2,6-di-tert-butyl-p-cresol,, methyl 3,5-di-tert-butyl-4-hydroxybenzoate, 4-tert-butylpyrocatechol, 2-hydroxybenzyl alcohol, 2-methoxy-4-methylphenol, 2,3,6-trimethylphenol, 2,4,5-trimethylphenol, 2,4,6-trimethylphenol, 2-isopropylphenol, 4-isopropylphenol, 6-isopropyl-m-cresol, n-octadecyl β-(3,5-di-tert-butyl-4-hydroxyphenyl)propionate, 1,1,3-tris(2-methyl-4-hydroxy-5-tert-butylphenyl)butane, 1,3,5-trimethyl-2,4,6-tris-(3,5-di-tert-butyl-4-hydroxybenzyl)benzene, 1,3,5,-tris(3,5-di-tert-butyl-4-hydroxybenzyl)isocyanurate, 1,3,5-tris(3,5-di-tert-butyl-4-hydroxyphenyl)propionyloxyethyl isocyanurate, 1,3,5-tris(2,6-dimethyl-3-hydroxy-4-tert-butylbenzyl)isocyanurate or pentaerythrityl tetrakis[p-(3,5-di-tert-butyl-4-hydroxyphenyl)propionate], 2,6-di-tert-butyl-4-dimethylaminomethylphenol, 6-sec-butyl-2,4-dinitrophenol, octadecyl 3-(3',5'-di-tert-butyl-4'-hydroxyphenyl)propionate, hexadecyl 3-(3',5'-di-tert-butyl-4'-hydroxyphenyl)propionate, octyl 3-(3',5'-di-tert-butyl-4'-hydroxyphenyl)propionate, 3-thia-1,5-pentanediol bis[(3',5'-di-tert-butyl-4'-hydroxyphenyl)propionate], 4,8-dioxa-1,11-undecanediol bis[(3',5'-di-tert-butyl-4'-hydroxyphenyl)propionate], 4,8-dioxa-1,11-undecanediol bis[(3'-tert-butyl-4'-hydroxy-5'-methylphenyl)propionate], 1,9-nonanediol bis[(3',5'-di-tert-butyl-4'-hydroxyphenyl)propionate], 1,7-heptanediaminebis[3-(3',5'-di-tert-butyl-4'-hydroxyphenyl)propionamide], 1,1-methanediaminebis[3-(3',5'-di-tert-butyl-4'-hydroxyphenyl)propionamide], 3-(3',5'-di-tert-butyl-4'-hydroxyphenyl)propionic acid hydrazide, 3-(3',5'-dimethyl-4'-hydroxyphenyl)propionic acid hydrazide, bis(3-tert-butyl-5-ethyl-2-hydroxyphen-1-yl)methane, bis(3,5-di-tert-butyl-4-hydroxyphen-1-yl)methane, bis[3-(1'-methylcyclohex-1'-yl)-5-methyl-2-hydroxyphen-1-yl]methane, bis(3-tert-butyl-2-hydroxy-5-methylphen-1-yl)methane, 1,1-bis(5-tert-butyl-4-hydroxy-2-methylphen-1-yl)ethane, bis(5-tert-butyl-4-hydroxy-2-methylphen-1-yl) sulfide, bis(3-tert-butyl-2-hydroxy-5-methylphen-1-yl) sulfide, 1,1-bis(3,4-dimethyl-2-hydroxyphen-1-yl)-2-methylpropane, 1,1-bis(5-tert-butyl-3-methyl-2-hydroxyphen-1-yl)butane, 1,3,5-tris-[1'-(3Δ,5"-di-tert-butyl-4"-hydroxyphen-1"-yl)meth-1'-yl]-2,4,6-trimethylbenzene, 1,1,4-tris(5'-tert-butyl-4'-hydroxy-2'-methylphen-1'-yl)butane and tert-butylcatechol, p-nitrosophenol, p-nitroso-o-cresol, methoxyphenol (guaiacol, pyrocatechol monomethyl ether), 2-ethoxyphenol, 2-isopropoxyphenol, 4-methoxyphenol (hydroquinone monomethyl ether), mono- or di-tert-butyl-4-methoxyphenol, 3,5-di-tert-butyl-4-hydroxyanisole, 3-hydroxy-4-methoxybenzyl alcohol, 2,5-dimethoxy-4-hydroxybenzyl alcohol, 4-hydroxy-3-methoxybenzaldehyde, 4-hydroxy-3-ethoxybenzaldehyde, 3-hydroxy-4-methoxybenzaldehyde, 1-(4-hydroxy-3-methoxyphenyl)ethanone, eugenol, dihydroeugenol, isoeugenol, tocopherols, such as α-, β-, γ-, δ- and ε-tocopherol, tocol, α-tocopherolhydroquinone, 2,3-dihydro-2,2-dimethyl-7-hydroxybenzofuran (2,2-dimethyl-7-hydroxycoumaran), and combinations thereof.

Suitable quinones and hydroquinones include hydroquinone, hydroquinone monomethyl ether(4-methoxyphenol), methylhydroquinone, 2,5-di-tert-butylhydroquinone, 2-methyl-p-hydroquinone, 2,3-dimethylhydroquinone, trimethylhydroquinone, 4-methylpyrocatechol, tert-butylhydroquinone, 3-methylpyrocatechol, benzoquinone, 2-methyl-p-hydroquinone, 2,3-dimethylhydroquinone, tert-butylhydroquinone, 4-ethoxyphenol, 4-butoxyphenol, hydroquinone monobenzyl ether, p-phenoxyphenol, 2-methylhydroquinone, tetramethyl-p-benzoquinone, diethyl-1,4-cyclohexanedione 2,5-dicarboxylate, phenyl-p-benzoquinone, 2,5-dimethyl-3-benzyl-p-benzoquinone, 2-isopropyl-5-methyl-p-benzoquinone (thymoquinone), 2,6-diisopropyl-p-benzoquinone, 2,5-dimethyl-3-hydroxy-p-benzoquinone, 2,5-dihydroxy-p-benzoquinone, embelin, tetrahydroxy-p-benzoquinone, 2,5-dimethoxy-1,4-benzoquinone, 2-amino-5-methyl-p-benzoquinone, 2,5-bisphenylamino-1,4-benzoquinone, 5,8-dihydroxy-1,4-naphthoquinone, 2-anilino-1,4-naphthoquinone, anthraquinone, N,N-dimethylindoaniline, N,N-diphenyl-p-benzoquinonediimine, 1,4-benzoquinone dioxime, coerulignone, 3,3'-di-tert-butyl-5,5'-dimethyldiphenoquinone, p-rosolic acid (aurin), 2,6-di-tert-butyl-4-benzylidenebenzoquinone, 2,5-di-tert-amylhydroquinone, and combinations thereof.

Suitable N-oxyl compounds (i.e., nitroxyl or N-oxyl radicals) include compounds which have at least one N-O• group, such as 4-hydroxy-2,2,6,6-tetramethylpiperidin-N-oxyl, 4-oxo-2,2,6,6-tetramethylpiperidin-N-oxyl, 4-methoxy-2,2,6,6-tetramethylpiperidin-N-oxyl, 4-acetoxy-2,2,6,6-tetramethylpiperidin-N-oxyl, 2,2,6,6-tetramethylpiperidin-N-oxyl (TEMPO), 4,4',4"-tris(2,2,6,6-tetramethylpiperidin-N-oxyl)phosphite, 3-oxo-2,2,5,5-tetramethylpyrrolidin-N-oxyl, 1-oxyl-2,2,6,6-tetramethyl-4-methoxypiperidine, 1-oxyl-2,2,6,6-tetramethyl-4-trimethylsilyloxypiperidine, 1-oxyl-2,2,6,6-tetramethylpiperidin-4-yl 2-ethylhexanoate, bis(2,2,6,6-tetramethylpiperidin-1-yl)oxyl sebacate, 1-oxyl-2,2,6,6-tetramethylpiperidin-4-yl stearate, 1-oxyl-2,2,6,6-tetramethylpiperidin-4-yl-benzoate, 1-oxyl-2,2,6,6-tetramethylpiperidin-4-yl (4-tert-butyl)benzoate, bis(1-oxyl-2,2,6,6-tetramethylpiperidin4-yl) succinate, bis(1-oxyl-2,2,6,6-tetramethylpiperidin-4-yl) adipate, bis(1-oxyl-2,2,6,6-tetramethylpiperidin-4-yl)1,10-decanedioate, bis(1-oxyl-2,2,6,6-tetramethylpiperidin4-yl)n-butylmalonate, bis(1-oxyl-2,2,6,6-tetramethylpiperidin-4-yl) phthalate, bis(1-oxyl-2,2,6,6-tetramethylpiperidin-4-yl)isophthalate, bis(1-oxyl-2,2,6,6-tetramethylpiperidin4-yl) terephthalate, bis(1-oxyl-2,2,6,6-tetramethylpiperidin-4-yl) hexahydroterephthalate, N,N'-bis(1-oxyl-2,2,6,6-tetramethylpiperidin-4-yl)adipamide, N-(1-oxyl-2,2,6,6-tetramethylpiperidin-4-yl)caprolactam, N-(1-oxyl-2,2,6,6-tetramethylpiperidin-4-yl)dodecylsuccinimide, 2,4,6-tris[N-butyl-N-(1-oxyl-2,2,6,6-tetramethylpiperidin-4-yl]triazine, N,N'-bis(1-oxyl-2,2,6,6-tetramethylpiperidin-4-yl)-N,N'-bisformyl-1,6-diaminohexane, 4,4'-ethylenebis(1-oxyl-2,2,6,6-tetramethylpiperazin-3-one), and combinations thereof.

Other compounds suitable for use in or as the inhibitor include phenothiazine (PTZ) and compounds with similar structures, such as phenoxazine, promazine, N,N'-dimethylphenazine, carbazole, N-ethylcarbazole, N-benzylphenothiazine, N-(1-phenylethyl)phenothiazine, N-Alkylated phenothiazine derivatives such as N-benzylphenothiazine and N-(1-phenylethyl)phenothiazine, and combinations thereof. The inhibitor may be one compound or a combination of two or more of different compounds, as described an exemplified above. Alternatively, the inhibitor may comprise (2,2,6,6-tetramethylpiperidin-1-yl)oxyl (TEMPO), 4-hydroxy (2,2,6,6-tetramethylpiperidin-1-yl)oxyl (4HT), bis(2,2,6,6-tetramethylpiperidin-1-yl)oxyl sebacate (Bis-TEMPO), polymer-bound TEMPO, or a combination thereof.

The method may optionally further comprise one or more additional steps. For example, the method may further comprise (2) recovering the ester - functional siloxane from the reaction product prepared in step (1). Recovering may be performed by any convenient means, such as stripping and/or distillation, optionally with heating and/or reduced pressure. Without wishing to be bound by theory, it is thought that any unreacted starting materials may be recycled in a subsequent reaction. Alternatively, recovering may be performed to separate the ester - functional siloxane and the platinum hydrosilylation reaction catalyst (or complex of said catalyst with the promoter).

The ester - functional siloxane prepared by the method may have unit formula (G1): (R¹₃SiO_{1/2})ₐ(R¹₂R⁴SiO_{1/2})_{b}(R⁴R¹SiO_{2/2})_{c}(R¹₂SiO_{2/2})_{d}, where each R¹ and subscripts a, b, c, and d are as described above, and each R⁴ is a group of formula 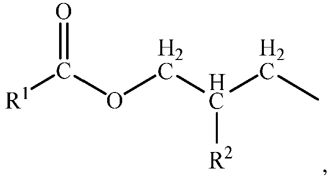 where R¹ and R² are as described above.

### EXAMPLES

These examples are intended to illustrate the invention to one skilled in the art and are not to be interpreted as to limit the invention set forth in the claims.

In this Reference Example 1, hydrosilylation reaction of allyl methacrylate and 1,1,1,3,5,5,5-heptamethyltrisiloxane (HMTS) using a platinum catalyst to form 3-(1,1,1,3,5,5,5-heptamethyltrisiloxan-3-yl)propyl methacrylate (MD'M-ALMA) was studied (see Equation 1, above). Samples were prepared as follows: In a N₂ filled glovebox, 0.1 mL (0.01 mmol) of Karstedt catalyst (2% Pt by weight in xylene solution, commercially available from Millipore Sigma, CAS number 2017-20-7) was charged into a GC vial. When used, a promoter was added to the catalyst solution such that the (Pt: promoter) ratio was 1:1. The resulting catalyst solution was left undisturbed for 30 min prior to use. The proper volume of this catalyst solution (2 µL, 100 ppm) was then added to 1 mmol of allyl methacrylate (shown in Equation 1 as substrate **1** ) (126 mg) and 800 ppm TEMPO (used as inhibitor) in to a 2-dram vial and heated to 50 °C. 1.1 mmol of HMTS (245 mg) was slowly injected into the reaction vial. The reaction temperature was maintained at 50 °C and monitored by GC-FID/¹H NMR. Once the GC-FID showed partial or complete consumption of substrate 1 (generally after 20 h to 24 h), the heating block was removed and the resulting product was further analyzed by NMR spectroscopy.

GC-FID conditions were as follows: GC-FID were run on an Agilent 7890A equipped with an Agilent DB-5 capillary (15m x 0.25mm x 0.25 µm; Length, ID, Film). The method was holding at 50 °C for 2 min, then ramping to 250 °C at 20 ° min⁻¹ and hold at 250 °C for 5 min.

**Table 1 - Screening Different Promoter Candidates**

| Sample | Promoter Candidate | Pt: Promoter ratio | 3 (MD'M-ALMA) 4 (Oxy-silyl ester) | Conv. (%) |
|---|---|---|---|---|
| 1 (Control) | No promoter | - | 1.5 : 1 | 100 |
| 2 | Tris(t-butyl)phosphine P(tBu)₃ | 1:2 | 1.7:1 | 35 |
| 3 | 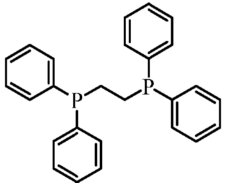 bis(diphenylphosphino) ethane, (dppe) | 1:1 | 1.8 : 1 | >90 |
| 4 | 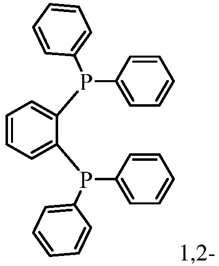 bis(diphenylphosphaneyl)benzene | 1:1 | 1.7 : 1 | >90 |
| 5 | 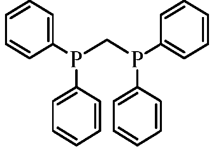 Bis(diphenylphosphino) methane (dppm) | 1:0.75 | 3.4 : 1 | 80-90 |

| Sample | Promoter Candidate | Pt: Promoter ratio | 3 (MD'M-ALMA) : 4 (Oxy-silyl ester) | Conv. (%) |
|---|---|---|---|---|
| 6 | 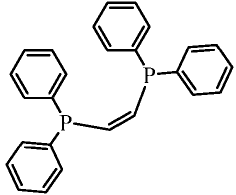 (Z)-1,2-bis(diphenylphosphaneyl)ethene | 1:0.75 | 2.1: 1 | 30-40 |
| 7 | 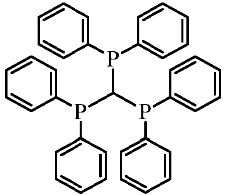 Tris(diphenylphosphino)methane (tppm) | 1:0.6 | 2.5: 1 | 50 |
| 8 | 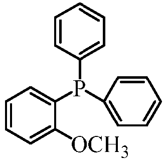 (2-methoxyphenyl)diphenylphosphane | 1:0.75 | 2.3: 1 | 30 |
| 9 | 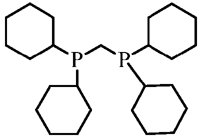 Bis(dicyclohexylphosphino)methane (dchpm) | 1:0.75 | 4:1 | 50 |
| 10 | 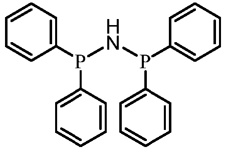 bis(diphenylphosphaneyl)amine | 1:0.5 | 3.6: 1 | 40 |

Example 1 in Table 1 shows that failure to include a promoter resulted in poor selectivity under the conditions tested. The yield ratio of desired product, MD'M-ALMA, produced relative to the oxy - silyl ester side product was only 1.5:1. Furthermore, examples 2 and 3 showed that comparative phosphine compounds, such as those disclosed in U.S. Patent 5,750,753, also promoted poor selectivity under the conditions tested.

In contrast, examples 5 and 9 showed that dppm and dchpm all produced reaction products with both 1) high selectivity to the desired product, MD'M-ALMA (e.g., with yield ratio ≥ 3.4:1) and 2) good conversion of the starting materials (e.g., ≥ 50%).

In this Reference Example 2, the reaction described in Reference Example 1 was run using different loadings of dppm and catalyst. The results are shown below in Table 2.

**Table 2 - Varying amounts of dppm and catalyst**

| Sample | Equivalents of dppm added (wrt 1 equivalent Pt) | Catalyst loading Reaction time | MD'M-ALMA **3** (GC area%) | oxy-silyl ester **4** (GC area%) | Propylene hydrosilylated adduct **5** (GC area%) | Observations |
|---|---|---|---|---|---|---|
| 2-1 | no dppm | 5ppm 30 min | 50 | 30 | 10 | - |
| 2-2 | 0.25 | 20 ppm 1 h | 52 | 30 | 8 | Reaction was extremely fast, significant difference on selectivity was not observed |
| 2-3 | 0.5 | 20 ppm 1 h | 49 | 28 | 7 | Reaction was extremely fast, significant difference on selectivity was not observed |
| 2-4^{a} | 0.75 | 100 ppm 14 h | 30 | 8 | -^{b} | Reaction rate slowed down, needed 24 h for complete conversion |
| 2-5^{a} | 1.0 | 100 ppm 14 h | 25 | 7 | -^{b} | Reaction rate slowed down, needed 24 h for complete conversion |
| 2-6^{c} | 1.25 | 250 ppm 24 h | - | - | - | Reaction completely shut down, no conversion observed even with 250ppm catalyst at 80 °C |
| 2-7^{c} | 1.50 | 250 ppm 24 h | - | - | - | Reaction completely shut down, no conversion observed even with 250ppm catalyst at 80 °C |

| | | | | | | |
|---|---|---|---|---|---|---|
| ^{a} rest of the mass balance accounted for unreacted starting material, > 90% conversion to the MD'M-ALMA after 24 h ^{b} only observed < 2-3% of propylene hydrosilylated product ^{c} reaction completely shut down and all starting materials were recovered after 24 h | | | | | | |

The data in Table 2 showed that the amount of promoter can affect yield and selectivity.

In this Reference Example 3, hydrosilylation reaction of allyl acetate (6) and HMTS using a platinum catalyst and dppm to form 3-(1,1,1,3,5,5,5-heptamethyltrisiloxan-3-yl)propyl acetate (7) was studied.

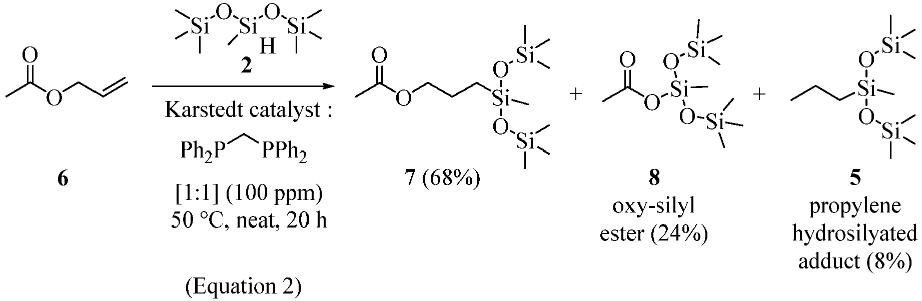

Samples were prepared as follows: In a N₂ filled glovebox, 0.1 mL (0.01 mmol) of Karstedt's catalyst (2% Pt by weight in Xylene solution, commercially available from Millipore Sigma, CAS number 2017-20-7) was charged into a GC vial. The proper amount of diphenylphosphinomethane promoter (4.0 mg, 0.01 mmol) was added to the catalyst solution such that the (Pt: promoter) ratio was in the range of 1:1 to 1: 0.75. The catalyst solution was left undisturbed for 30 min prior use. The proper volume of this catalyst solution (2 µL, 100 ppm) was then added to 1 mmol of allyl acetate (substrate 6) (100 mg) and 800 ppm TEMPO (used as inhibitor) in a 2-dram vial and heated to 50 °C. 1.1 mmol of HMTS (245 mg) was slowly injected into the vial. The reaction temperature was maintained at 50 °C and monitored by GC-FID/¹H NMR. Once the GC-FID showed partial or complete consumption of allyl acetate (substrate 6) (generally needed 20-24 h), the heating block was removed and the resulting product was further analyzed by NMR spectroscopy.

GC-FID conditions: GC-FID were run on an Agilent 7890A equipped with an Agilent DB-5 capillary (15m x 0.25mm x 0.25 µm; Length, ID, Film). The method was holding at 50 °C for 2 min, then ramping to 250 °C at 20 ° min⁻¹ and hold at 250 °C for 5 min.

**Table 3 - Results of Reference Example 3**

| Sample | Equiv' s of dppm added | Catalyst loading/ Reactio n time | 3-(1,1,1,3,5,5,5-heptamethyltrisiloxan -3-yl) propyl acetate (7) (GC area%) | Oxy-silyl ester (8) (GC area% ) | propylene hydrosilylate d adduct (5) (GC area%) | Observation s |
|---|---|---|---|---|---|---|
| 3- 1 Contro 1 | no dppm | 20 ppm/ 30 min | 59 | 27 | 14 | - |
| 3-2 | 0.5 | 20 ppm/ 1 h | 65 | 28 | 7 | Reaction was fast, small difference on selectivity was observed |
| 3 - 3^{a} | 0.75 | 100 ppm/ 14 h | 68 | 24 | 8 | Reaction rate slowed down, need 20-24 h for complete conversion |

The results in Table 3 showed that use of the dppm promoter was effective to produce a product with good yield (≥ 65%, higher than the control without promoter) and selectivity to 3-(1,1,1,3,5,5,5-heptamethyltrisiloxan-3-yl)propyl acetate under the conditions tested.

### Industrial Applicability

A method for preparing an ester - functional siloxane has benefits over a previous method that does not include a promoter as described herein. The combination of benefits includes both 1) high selectivity to the desired ester - functional siloxane (e.g., with a yield ratio of the ester - functional siloxane: oxy -silyl ester side product) of ≥ 2.5:1) and 2) good conversion of the starting materials (e.g., ≥ 50%).

### DEFINITIONS AND USAGE OF TERMS

All amounts, ratios, and percentages are by weight unless otherwise indicated. The articles 'a', 'an', and 'the' each refer to one or more, unless otherwise indicated by the context of specification. The singular includes the plural unless otherwise indicated. The term "comprising" and derivatives thereof, such as "comprise" and "comprises" are used herein in their broadest sense to mean and encompass the notions of "including," "include," "consist(ing) essentially of," and "consist(ing) of. The use of "for example," "e.g.," "such as," and "including" to list illustrative examples does not limit to only the listed examples. Thus, "for example" or "such as" means "for example, but not limited to" or "such as, but not limited to" and encompasses other similar or equivalent examples.

It is to be understood that the appended claims are not limited to express any particular compounds, compositions, or methods described in the detailed description, which may vary between particular embodiments which fall within the scope of the appended claims. With respect to any Markush groups relied upon herein for describing particular features or aspects of various embodiments, different, special, and/or unexpected results may be obtained from each member of the respective Markush group independent from all other Markush members. Each member of a Markush group may be relied upon individually and or in combination and provides adequate support for specific embodiments within the scope of the appended claims.

Abbreviations used herein are defined in Table 4.

**Table 4 - Abbreviations**

| Abbreviation | Definition |
|---|---|
| °C | Degrees Celsius |
| COD | cyclooctadiene |
| DP | degree of polymerization |
| DSC | Dow Silicones Corporation of Midland, Michigan, USA |
| g | gram |
| h | hour |
| HMTS | 1,1,1,3,5,5,5-heptamethyltrisiloxane |
| in | inch |
| m | meter |
| MD'M-ALMA | 3-(1,1,1,3,5,5,5-heptamethyltrisiloxan-3-yl)propyl methacrylate |
| Me | methyl |
| mg | milligram |
| min | minute |
| mm | millimeter |
| mmol | millimole |
| mPa·s | milli Pascal seconds |
| ppm | part per million |
| RT | room temperature of 25 ± 2 °C |
| s | second |
| µL | microliter |
| µm | micrometer |
| wrt | with respect to |

## Claims

1. A method for preparing an ester - functional siloxane, wherein the method comprises: (1) combining starting materials comprising
(A) an alkenyl ether of formula 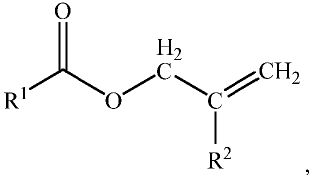 where R¹ is a monovalent hydrocarbon group of 1 to 12 carbon atoms, and R² is selected from the group consisting of hydrogen and an alkyl group of 1 to 12 carbon atoms;
(B) an organohydrogensiloxane oligomer of unit formula
(R¹₃SiO_{1/2})ₐ(R¹₂HSiO_{1/2})_{b}(HR¹SiO_{2/2})_{c}(R¹₂SiO_{2/2})_{d}, where each R¹ is an independently selected monovalent hydrocarbon group of 1 to 12 carbon atoms, subscripts a, b, c, and d each represent average numbers of a unit in the unit formula and have values such that 0 ≤ a ≤ 2; 0 ≤ b ≤ 2; 0 ≤ c ≤ 3, 0 ≤ d ≤ 3, a quantity (a + b) = 2, a quantity (b + c) ≥ 1, and a quantity (a + b + c + d) is 2 to 10;
where (A) the alkenyl ether and (B) the organohydrogensiloxane oligomer are present in amounts such that a molar ratio of the amount of (B) the organohydrogensiloxane oligomer: (A) the alkenyl ether (B):(A) is 1.25:1 to 0.75:1;
(C) a platinum hydrosilylation reaction catalyst; and
an amount sufficient to provide a both a yield ratio of the ester - functional siloxane : an oxy -silyl ester side product of ≥ 2.5:1 and a conversion of starting materials (A) and (B) ≥ 50% of (D) a promoter of formula 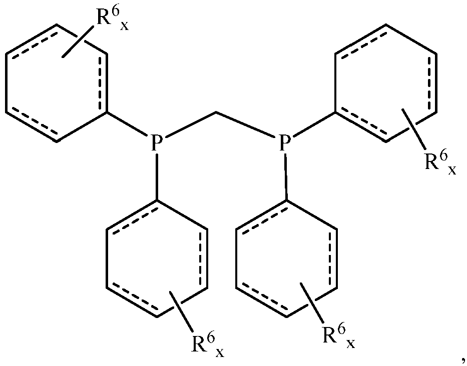 where each group of formula 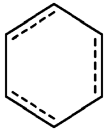 is independently selected from the group consisting of cyclohexyl and phenyl; each R⁶ is an independently selected an alkyl group of 1 to 6 carbon atoms; and each subscript x is independently 0, 1, or 2.

2. The method of claim 1, where in starting material (A), R¹ is methyl.

3. The method of claim 1, where in starting material (A), R¹ is an alkenyl group of formula

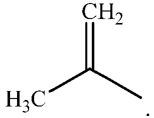

4. The method of claim 1, where in starting material (A), R¹ is an alkenyl group of formula

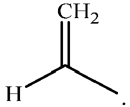

5. The method of any one of claims 1 to 4, where starting material (B) has formula

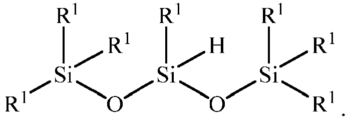

6. The method of claim 5, where each R¹ is methyl.

7. The method of any one of claims 1 to 6, where starting material (C) comprises a platinum vinyldimethylsiloxane complex.

8. The method of any one of claims 1 to 7, where the method further comprises combining (C) the platinum hydrosilylation reaction catalyst and (D) the promoter before step (1).

9. The method of claim 8, where (C) the platinum hydrosilylation reaction catalyst and (D) the promoter are combined (E) in a solvent.

10. The method of any one of claims 1 to 9, where the amount of starting material (D) is > 0.5 mol to < 1.25 mol, per 1 mol of platinum, and starting material (D) is selected from the group consisting of:
(D1) bis(diphenylphosphino)methane,
(D2) bis(dicyclohexylphosphino)methane, and
(D3) a combination of both (D1) and (D2).

11. The method of claim 10, where the promoter is (D1) bis(diphenylphosphino)methane.

12. The method of claim 11, where the promoter is (D2) bis(dicyclohexylphosphino)methane.

13. The method of any one of claims 1 to 12, where the amount of (D) the promoter is 0.75 mol to 1 mol, per 1 mol of platinum.

14. The method of any one of claims 1 to 13, where the method further comprises adding (F) a (meth)acrylate polymerization inhibitor.

15. The method of any one of claims 1 to 14, further comprising (2) recovering the ester - functional siloxane after step (1).

## Patentansprüche

1. Verfahren zum Herstellen eines esterfunktionellen Siloxans, wobei das Verfahren umfasst: (1) Kombinieren von Ausgangsmaterialien, umfassend
(A) ein Alkenylether der Formel 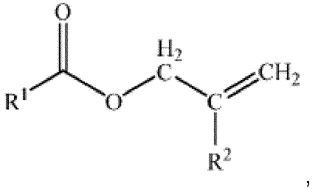 wobei R¹ eine einwertige Kohlenwasserstoffgruppe mit 1 bis 12 Kohlenstoffatomen ist, und R² aus der Gruppe ausgewählt ist, bestehend aus Wasserstoff und einer Alkylgruppe von 1 bis 12 Kohlenstoffatomen;
(B) ein Organohydrogensiloxanoligomer der Einheitsformel (R¹₃SiO_{1/2})ₐ(R¹₂HSiO_{1/2})_{b}(HR¹SiO_{2/2})_{c}(R¹₂SiO_{2/2})_{d}, wobei jedes R¹ eine unabhängig ausgewählte einwertige Kohlenwasserstoffgruppe mit 1 bis 12 Kohlenstoffatomen, Indizes a, b, c und d jeweils durchschnittliche Zahlen einer Einheit in der Einheitsformel darstellen und Werte derart aufweisen, dass 0 ≤ a ≤ 2; 0 ≤ b ≤ 2; 0 ≤ c ≤ 3, 0 ≤ d ≤ 3, eine Menge (a + b) = 2, eine Menge (b + c) ≥ 1 und eine Menge (a + b + c + d) 2 bis 10 ist;
wobei (A) der Alkenylether und (B) das Organohydrogensiloxan-Oligomer in derartigen Mengen vorhanden sind, dass ein Molverhältnis der Menge von (B) dem Organohydrogensiloxan-Oligomer: (A) dem Alkenylether (B):(A) 1,25:1 bis 0,75:1 beträgt;
(C) einem Platin-Hydrosilylierungsreaktionskatalysator; und
einer Menge, die ausreicht, um sowohl ein Ausbeuteverhältnis des esterfunktionellen Siloxans : eines Oxysilylester-Nebenprodukts von ≥ 2,5:1 als auch eine Umwandlung der Ausgangsmaterialien (A) und (B) von ≥ 50 % von (D) einem Promotor der Formel 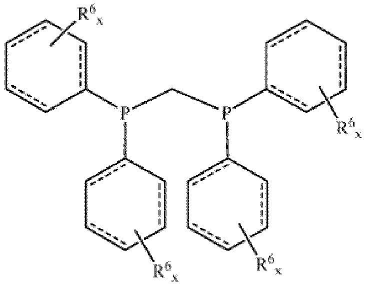 bereitzustellen, wobei jede Gruppe der Formel 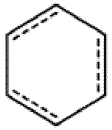 unabhängig aus der Gruppe ausgewählt ist, die aus Cyclohexyl und Phenyl besteht; jedes R⁶ eine unabhängig ausgewählte Alkylgruppe mit 1 bis 6 Kohlenstoffatomen ist; und jeder Index b unabhängig 0, 1 oder 2 ist.

2. Verfahren nach Anspruch 1, wobei in Ausgangsmaterial (A) R¹ Methyl ist.

3. Verfahren nach Anspruch 1, wobei in dem Ausgangsmaterial (A) R¹ eine Alkenylgruppe der Formel

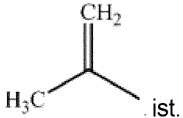

4. Verfahren nach Anspruch 1, wobei in dem Ausgangsmaterial (A) R¹ eine Alkenylgruppe der Formel

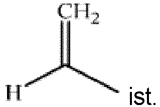

5. Verfahren nach einem der Ansprüche 1 bis 4, wobei das Ausgangsmaterial (B) die Formel 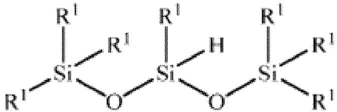 aufweist.

6. Verfahren nach Anspruch 5, wobei jedes R¹ ein Methyl ist.

7. Verfahren nach einem der Ansprüche 1 bis 6, wobei das Ausgangsmaterial (C) einen Platin-Vinyldimethersiloxankomplex umfasst.

8. Verfahren nach einem der Ansprüche 1 bis 7, wobei das Verfahren ferner ein Kombinieren von (C) dem Platin-Hydrosilylierungsreaktionskatalysator und (D) dem Promotor vor Schritt (1) umfasst.

9. Verfahren nach Anspruch 8, wobei (C) der Platin-Hydrosilylierungsreaktionskatalysator und (D) der Promotor in einem Lösungsmittel kombiniert werden (E).

10. Verfahren nach einem der Ansprüche 1 bis 9, wobei die Menge des Ausgangsmaterials (D) > 0,5 Mol bis < 1,25 Mol pro 1 Mol Platin beträgt und das Ausgangsmaterial (D) aus der Gruppe ausgewählt wird, bestehend aus:
(D1) Bis(diphenylphosphino)methan,
(D2) Bis(dicyclohexylphosphino)methan und
(D3) einer Kombination von sowohl (D1) als auch (D2).

11. Verfahren nach Anspruch 10, wobei der Promotor (D1) Bis(diphenylphosphino)methan ist.

12. Verfahren nach Anspruch 11, wobei der Promotor (D2) Bis(dicyclohexylphosphino)methan ist.

13. Verfahren nach einem der Ansprüche 1 bis 12, wobei die Menge (D) des Promotors 0,75 Mol bis 1 Mol pro 1 Mol Platin beträgt.

14. Verfahren nach einem der Ansprüche 1 bis 13, wobei das Verfahren ferner ein Hinzufügen von (F) einem (Meth)acrylat-Polymerisationsinhibitor umfasst.

15. Verfahren nach einem der Ansprüche 1 bis 14, ferner umfassend (2) ein Gewinnen des esterfunktionellen Siloxans nach Schritt (1).

## Revendications

1. Procédé de préparation d'un siloxane fonctionnel ester, dans lequel le procédé comprend : (1) la combinaison de matériaux de départ comprenant
(A) un éther alcénylique de formule 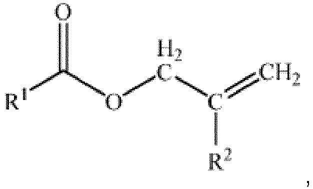 où R¹ est un groupe hydrocarboné monovalent de 1 à 12 atomes de carbone, et R² est choisi indépendamment dans le groupe constitué d'hydrogène et d'un groupe alkyle de 1 à 12 atomes de carbone ;
(B) un oligomère organohydrogénosiloxane de formule unitaire (R¹₃SiO_{1/2})ₐ(R¹₂HSiO_{1/2})_{b}(HR¹SiO_{2/2})_{c}(R¹₂SiO_{2/2})_{d}, où chaque R¹ est un groupe hydrocarboné monovalent de 1 à 12 atomes de carbone choisi indépendamment, les indices a, b, c et d représentent chacun les nombres moyens d'une unité dans la formule unitaire et ont des valeurs telles que 0 ≤ a ≤ 2 ; 0 ≤ b ≤ 2 ; 0 ≤ c ≤ 3, 0 ≤ d ≤ 3,une quantité (a + b) = 2, une quantité (b + c) ≥ 1, et une quantité (a + b + c + d) est de 2 à 10 ;
où (A) l'éther alcénylique et (B) l'oligomère organohydrogénosiloxane sont présents en quantités telles qu'un rapport molaire de la quantité de (B) l'oligomère organohydrogénosiloxane : (A) l'éther alcénylique (B) : (A) est compris entre 1,25:1 et 0,75:1 ;
(C) un catalyseur de réaction d'hydrosilylation de platine ; et
une quantité suffisante pour fournir à la fois un rapport de rendement du siloxane fonctionnel ester : un produit latéral d'ester oxy-silyle de ≥ 2,5:1 et une conversion des produits de départ (A) et (B) ≥ 50 % de (D) un promoteur de formule 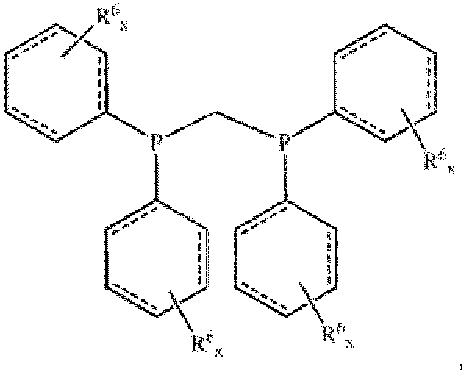 où chaque groupe de la formule 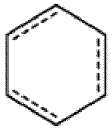 est indépendamment choisi dans le groupe constitué de cyclohexyle et de phényle ; chaque R⁶ est un groupe alkyle choisi indépendamment de 1 à 6 atomes de carbone ; et chaque indice x vaut indépendamment 0, 1, ou 2.

2. Procédé selon la revendication 1, où, dans le matériau de départ (A), R¹ est méthyle.

3. Procédé selon la revendication 1, où, dans le matériau de départ (A), R¹ est un groupe alcényle de formule

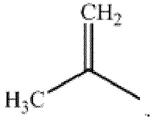

4. Procédé selon la revendication 1, où, dans le matériau de départ (A), R¹ est un groupe alcényle de formule

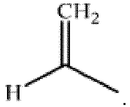

5. Procédé selon l'une quelconque des revendications 1 à 4, où, le matériau de départ (B), a la formule

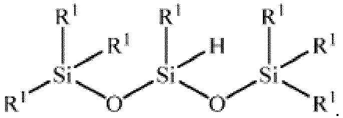

6. Procédé selon la revendication 5, où chaque R¹ est méthyle.

7. Procédé selon l'une quelconque des revendications 1 à 6, où, le matériau de départ (C), comprend un complexe platine vinyldiméthylsiloxane.

8. Procédé selon l'une quelconque des revendications 1 à 7, où le procédé comprend en outre la combinaison (C) du catalyseur de réaction d'hydrosilylation au platine et (D) le promoteur avant l'étape (1).

9. Procédé selon la revendication 8, où (C) le catalyseur de réaction d'hydrosilylation au platine et (D) le promoteur sont combinés (E) dans un solvant.

10. Procédé selon l'une quelconque des revendications 1 à 9, où la quantité de matériau de départ (D) est > 0,5 mol à < 1,25 mol, par 1 mol de platine, et le matériau de départ (D) est choisi dans le groupe constitué de :
(D1) bis(diphénylphosphino)méthane,
(D2) bis(dicyclohexylphosphino)méthane, et
(D3) une combinaison à la fois de (D1) et de (D2).

11. Procédé selon la revendication 10, où le promoteur est le (D1) bis(diphénylphosphino)méthane.

12. Procédé selon la revendication 11, où le promoteur est le (D2) bis(dicyclohexylphosphino)méthane.

13. Procédé selon l'une quelconque des revendications 1 à 12, où la quantité de (D) promoteur est de 0,75 mol à 1 mol, pour 1 mol de platine.

14. Procédé selon l'une quelconque des revendications 1 à 13, où le procédé comprend en outre l'ajout (F) d'un inhibiteur de polymérisation de (méth)acrylate.

15. Procédé selon l'une quelconque des revendications 1 à 14, comprenant en outre (2) la récupération du siloxane à fonctionnalité ester après l'étape (1).
